# EUROPÄISCHE PATENTANMELDUNG

(11) **EP 2 985 132 A1**
(43) Veröffentlichungstag der Anmeldung: **17.02.2016**
(21) Anmeldenummer: 15182861.3
(22) Anmeldetag: 13.12.2012
(51) Int. Cl.: B29C 53/58, B29C 70/32, B29C 70/86

(54) **STRUKTURINTEGRIERTE VERSTÄRKUNG IN GEWICKELTEN BAUTEILEN AUS VERBUNDWERKSTOFFEN**

(62) Teilanmeldung aus: 12197018.0
(71) Anmelder: Enrichment Technology Company Ltd. Zweigniederlassung Deutschland, 52409 Jülich (DE)
(72) Erfinder: Sonnen, Michael, 47259 Duisburg (DE); Otremba, Frank, 52223 Stolberg (DE)
(74) Vertreter: Jostarndt, Hans-Dieter

(57) **Zusammenfassung**

Die Erfindung betrifft ein Bauteil (41) mit einem Faserverbundbereich (42) aus Faserverbundmaterialien, umfassend einen oder mehrere Normalbereiche (421) und einen oder mehrere Verstärkungsbereiche (422) mit einer oder mehreren Verbindungsflächen (43), die zur Verbindung mit einer jeweiligen Kraftübertragungskomponente (3) zur Krafteinleitung in das Bauteils (41) vorgesehen sind, wobei die eine oder mehreren Faser(n) (F) im Normalbereich (421) in einem mittleren ersten Faserwinkel (MF1) zur Richtung der Krafteinleitung und im Verstärkungsbereich (422) zumindest teilweise in einem mittleren zweiten Faserwinkel (MF2) zur Richtung der Krafteinleitung (K) angeordnet sind und der zweite mittlere Faserwinkel (MF2) kleiner als der erste mittlere Faserwinkel (MF1) ist. Dadurch wird ein Bauteil (41) mit platzsparenden verstärkten Bereichen (422) bereitgestellt, das die Belastungen des Bauteils (41) im Betrieb kompensieren kann und das eine hohe Lebensdauer besitzt.

## Beschreibung

### Gebiet der Erfindung

Die Erfindung bezieht sich auf ein Bauteil, umfassend Faserverbundmaterialien mit Verstärkungsbereichen, auf einen entsprechenden Rotationskörper im Fall eines drehenden Bauteils und auf ein Verfahren zur Herstellung dieser Bauteile.

### Hintergrund der Erfindung

Bei Bauteilen kommt es an Verbindungsstellen zu den Antrieben oder zu den statischen Belastungspunkten, beispielsweise in der Komponentenkette Welle-Nabe-Felge, durch Steifigkeits- und/oder Dichteunterschiede zu zusätzlichen Belastungen. Diese zusätzlichen Belastungen (statisch oder dynamisch) können zum Versagen des Bauteils beziehungsweise zu einer Verminderung der Belastbarkeit gegenüber Krafteinleitungen und damit zu einer verminderten Effizienz oder Leistungsfähigkeit des Bauteils führen.

Um diese negativen Einflüsse auf die Bauteile zu vermindern oder zu beseitigen wird versucht, die Belastung üblicherweise durch außenliegende Verstärkungen abzufangen. Solche außenliegenden Verstärkungen werden beispielsweise in Form eines Rings um die zu verstärkenden Bereiche angebracht. Die Anbringung einer solchen Verstärkung bedeutet einen zusätzlichen Fertigungsschritt, was den Fertigungsaufwand erhöht. Durch den relativ großen Abstand zwischen außenliegender Verstärkung und Belastungseinleitung werden die dazwischenliegenden Bereiche trotzdem höher belastet. Die Belastung kann durch die außenliegende Verstärkung nie vollständig kompensiert werden. Außerdem ist zusätzliches Verstärkungsmaterial erforderlich, was den Materialbedarf für das gesamte Bauteil erhöht. Durch die äußere Verstärkung wird das Bauteil möglicherweise außen so verdickt, dass Anlagen mit solchen Bauteilen nicht so kompakt gebaut werden können, wie es wünschenswert wäre. Zusätzlich führt eine solche außenliegende Verstärkung bei Bauteilen aus Faserverbundwerkstoffen zu Eigenspannungen im darunterliegenden Laminat, die eine Delamination begünstigen. Bei einer äußeren Verstärkung aus Faserverbundwerkstoff können sich Faserenden an der Bauteiloberfläche der Verstärkung im Betrieb lösen. Es könnten zwar alternativ andere Materialien als Materialien mit Fasern als Verstärkung eingesetzt werden. Allerdings sind Faserverbundwerkstoffe aufgrund ihrer Materialeigenschaften und Herstellungskosten stark gegenüber anderen Materialien, beispielsweise Metallverstärkungen, bevorzugt.

### Zusammenfassung der Erfindung

Es ist eine Aufgabe der vorliegenden Erfindung, ein Bauteil mit integrierten verstärkten Bereichen bereitzustellen, das die Belastungen des Bauteils im Betrieb kompensieren kann und das eine hohe Lebensdauer besitzt.

Diese Aufgabe wird gelöst durch ein Bauteil mit einem Faserverbundbereich aus Faserverbundmaterialien, umfassend einen oder mehrere Normalbereiche und einen oder mehrere Verstärkungsbereiche mit einer oder mehreren Verbindungsflächen, die zur Verbindung mit einer jeweiligen Kraftübertragungskomponente zur Krafteinleitung in das Bauteils vorgesehen sind, wobei die eine oder mehreren Faser(n) im Normalbereich in einem mittleren ersten Faserwinkel zur Richtung der Krafteinleitung und im Verstärkungsbereich zumindest teilweise in einem mittleren zweiten Faserwinkel zur Richtung der Krafteinleitung angeordnet sind und der zweite mittlere Faserwinkel kleiner als der erste mittlere Faserwinkel ist.

Durch den erfindungsgemäßen Aufbau der Verstärkung der Verstärkungsbereiche wird die Verstärkung in das Bauteil integriert und kann damit die zusätzliche Belastung bei geeigneter Auslegung vollständig abfangen und damit kompensieren. Dadurch ist die integrierte Verstärkung auch direkt in dem Bereich angeordnet, in dem die Belastung eingeleitet wird. Dadurch wird die Belastung direkt am Ort ihrer Entstehung abgefangen. Somit ist nur ein Minimum an Verstärkungsmaterial erforderlich. Insbesondere wird kein zum Bauteil hinzuzufügendes Verstärkungsmaterial benötigt. Dies macht die integrierte Verstärkung wirtschaftlicher. Gegenüber platzverbrauchenden großen äußeren Verstärkungen gemäß dem Stand der Technik kann die intergrierte Verstärkung platzsparender, d.h. mit zumindest einer wesentlich geringeren Verdickung des Bauteils im Verstärkungsbereich, ausgeführt werden, was die Ausführung anwendungsabhängiger Ummantelungen oder Umschließungen für das Bauteil vereinfacht.

Das erfindungsgemäße Bauteil bezieht sich dabei auf jedes Bauteil, das zur Aufnahme einer Krafteinleitung durch eine Kraftübertragungskomponente in das Bauteil vorgesehen ist. Die Belastungen (Krafteinleitungen), die auf das erfindungsgemäße Bauteil ausgeübt werden, können beispielsweise statische oder dynamische Belastung sein. Statische Belastung sind beispielsweise Belastungen infolge einer Zugbelastung oder einer Torsionsbelastung, denen das Bauteil auf statische Weise entgegenwirken soll. Im statischen Fall wird das Bauteil oder die Kraftübertragungskomponente nicht durch einen Antrieb bewegt. Beispielsweise wird eine Torsionsbelastung auf das Bauteil ausgeübt, die das Bauteil ohne Eigendrehung beziehungsweise Positionsänderung abfangen soll. Dynamische Belastungen sind beispielsweise Schub- oder Zugbelastungen, eine Torsionsbelastung oder das Antreiben eines rotierenden Bauteils, die zeitlich variierend auftreten und/oder das Bauteil in einer vorgesehenen Weise physikalisch bewegen. Daher ist das Bauteil dazu vorgesehen, mit einer Kraftübertragungskomponente an einen solchen Antrieb angekoppelt zu werden. Der Antrieb kann das Bauteil beispielsweise in eine laterale oder rotierende Bewegung versetzen. Beispiele für solche dynamischen Belastungen sind unter anderem die lineare Bewegung des Bauteils in eine Bewegungsrichtung zum Schieben oder Ziehen einer Last oder die Änderung oder Aufrechterhaltung einer Rotationsfrequenz für ein entlang einer Drehachse drehendes Bauteil, wobei das Bauteil dazu geeignet ist, zur Drehung angetrieben zu werden. Der Antrieb kann hier je nach Anwendung des Bauteils vom Fachmann geeignet gewählt werden. Beispielsweise sind die Antriebe pneumatisch, hydraulisch, elektrisch, mechanisch oder in anderer Weise geeignet ausgeführt. In einer Ausführungsform ist das Bauteil zur Verwendung als ein entlang einer Drehachse drehendes Bauteil vorgesehen und besitzt eine hohlzylindrische Form mit der Zylinderachse als Drehachse, wobei die Zylinderinnenseite zur Verbindung mit der oder den Kraftübertragungskomponenten vorgesehen ist. Bei einem Bauteil als Hohlzylinder kann eine dafür geeignete Kraftübertragungskomponente eine Nabe sein, die innerhalb des Hohlzylinders angeordnet und mit diesem fest verbunden ist. Sofern die Kraftübertragungskomponente mit einer Welle verbunden ist, wird die Kraft (Drehung) der Welle über die entsprechend mitdrehende Kraftübertragungskomponente über die innenseitige Verbindung mit dem Bauteil auf das Bauteil übertragen, was dieses dann ebenfalls in Rotation versetzt.

Der Faserverbundbereich bezeichnet einen Bereich oder Volumen des Bauteils, das aus Faserverbundmaterialien hergestellt ist. Ein solches Faserverbundmaterial besteht im Allgemeinen aus zwei Hauptkomponenten, hier aus Fasern, eingebettet in einem Matrixmaterial, das den festen Verbund zwischen den Fasern herstellt. Der Faserverbundbereich kann dabei aus einer Faser oder aus mehreren Fasern gewickelt werden, wobei die Faser(n) in Kontakt zueinander eng nebeneinander gewickelt werden. Dadurch entsteht eine Faserlage, auf die die Fasern in weiteren Faserlagen gewickelt werden, bis der Faserverbundbereich die gewünschte Dicke besitzt. Durch den Verbund erhält das Faserverbundmaterial höherwertige Eigenschaften, wie beispielsweise eine höhere Festigkeit als sie jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern verwendet werden. Als Matrixmaterialien können beispielsweise Duromere, Elastomere, Thermoplaste oder keramische Materialien verwendet werden. Die Materialeigenschaften der Fasern und Matrixmaterialien sind dem Fachmann bekannt, so dass der Fachmann eine geeignete Kombination aus Fasern und Matrixmaterialien zur Herstellung eines Faserverbundbereiches des Bauteils für die jeweilige Anwendung auswählen kann. Hierbei können die Normal- und/oder Verstärkungsbereiche im Faserverbundbereich eine einzelne Faser oder mehrere gleiche oder unterschiedliche Fasern umfassen. In einer Ausführungsform ist das Bauteil vollständig aus Faserverbundmaterial hergestellt. Ein solches Bauteil weist die höchsten Festigkeiten bei geringem Gewicht auf.

Die mittleren ersten und zweiten Faserwinkel stellen dabei die mittleren Winkel zwischen der Richtung der Krafteinleitung in das Bauteil und der Faserrichtung dar. Die mittleren Faserwinkel können dabei je nach Anwendung deutlich variieren. Die mittleren Faserwinkel ergeben sich aus dem rechnerischen Durchschnitt der einzelnen Faserwinkel in den Normal- und Verstärkungsbereichen. Hierbei können die Faserwinkel der einzelnen Faser(n) in den Normalbereichen und/oder über den Verstärkungsbereichen durchaus schwanken, was den mittleren Faserwinkel nicht zwangsweise vergrößert oder verkleinert, sofern sich die einzelnen lokalen Schwankungen der Faserwinkel gegeneinander aufheben. Insbesondere beim Übergang von einem Normalbereich in einen Verstärkungebereich (Änderung des Faserwinkels) und umgekehrt können sich die lokalen Faserwinkel gegebenenfalls bei einer entsprechenden Herstellung des Bauteils deutlich von dem mittleren Faserwinkel in den entsprechenden Bereichen (Normalbereich oder Verstärkungsbereich) unterscheiden. Da diese Übergangsbereiche aber nur einen kleinen Anteil an den gesamten Bereichen (Normalbereich oder Verstärkungsbereich) besitzen, werden die mittleren Faserwinkel auch in diesem Fall nur unwesentlich von den lokalen Faserwinkeln in den Übergangsbereichen beeinflusst. Die gegenüber dem mittleren ersten Faserwinkel im Verstärkungsbereich größeren mittleren zweiten Faserwinkel liefert einen Faserwinkelunterschied, der den Grad der Verstärkung in den Verstärkungsbereichen relativ zu den Normalbereichen bestimmt. Durch die günstige Wahl des zweiten mittleren Faserwinkels in dem oder den Verstärkungsbereichen kann das Bauteil je nach Faserwinkelunterschied zum Teil deutlich verstärkt werden. Fasern besitzen in Faserrichtung die höchste Festigkeit. Wird die Lasteinleitung durch eine Zugkraft bewirkt, so entspricht der zweite Faserwinkel im Verstärkungsbereich vorzugweise Winkeln im Bereich von 0 Grad zur Zugrichtung. Wird die Lasteinleitung durch eine Torsionskraft bewirkt, so sind zweite Faserwinkel im Bereich von 45 Grad zur Längsachse des Bauteils vorteilhaft. Dagegen ist beispielsweise für drehende (rotierende) Bauteile der Verstärkungsbereich mechanisch umso robuster gegenüber Lasteinleitungen, wenn der Faserwinkel einem 90 Gradwinkel zur Drehachse des Bauteils entspricht. Der Faserwinkelunterschied zwischen erstem mittleren und zweitem mittleren Faserwinkel sowie die absoluten mittleren ersten und zweiten Faserwinkel können vom Fachmann im Rahmen der vorliegenden Erfindung für die jeweilige Anwendung und den Verstärkungsbedarf geeignet gewählt werden. Besitzt das Bauteil mehrere Verstärkungsbereiche, so können die Fasern in unterschiedlichen Verstärkungsbereichen mit gleichen oder unterschiedlichen mittleren zweiten Faserwinkeln angeordnet sein. Hier könnte beispielsweise bei unterschiedlichen Krafteinleitungen in unterschiedlichen Verstärkungsbereichen die Faseranordnung auf die Stärken der jeweiligen lokalen Krafteinleitungen angepasst werden, indem der zweite mittlere Faserwinkel in den unterschiedlichen Verstärkungsbereichen entsprechend der unterschiedlichen Krafteinleitung unterschiedlich gewählt wird. Außerdem kann der zweite Faserwinkel in einem Verstärkungsbereich von Faserlage zu Faserlage variieren.

Der Normalbereich bezeichnet den Bereich des Bauteils, in dem das Faserverbundmaterial auf die normale Belastung des Bauteils ohne Krafteinleitung ausgelegt ist. Daher können in diesem Normalbereich die Fasern mit einer Ausrichtung entlang des ersten mittleren Faserwinkels beispielsweise auch deutlich von der Richtung der Krafteinleitung abweichen, da im Normalbereich keine so hohe mechanische Belastbarkeit benötigt wird wie im Verstärkungsbereich.

Im Verstärkungsbereich tritt durch die Krafteinleitung durch die Kraftübertragungskomponente infolge einer statischen oder dynamischen Belastung des Bauteils eine lokale erhöhte Belastung auf. Zur Verstärkung gegenüber den Normalbereichen wird/werden im Verstärkungsbereich die Faser(n) mit einem zweiten mittleren Faserwinkel, der einer Faserorientierung möglichst in Richtung der Krafteinleitung in das Bauteil bewirkt, gewickelt, was gegenüber den Normalbereichen zu einer höheren mechanischen Belastbarkeit des Verstärkunsgbereiches führt.

In einer Ausführungsform sind die Fasern ein oder mehrere Elemente aus der Gruppe Naturfaser, Glasfaser, Keramikfaser, Stahlfaser, synthetischer Faser, Kohlenstofffaser oder belastbarere Kohlenstofffaser. Im Rahmen der vorliegenden Erfindung kann der Fachmann auch andere geeignete Fasern wählen.

Durch die Integration der Verstärkung als Verstärkungsbereich mit Fasern, die im Verstärkungsbereich lediglich ihre Ausrichtung gegenüber den Normalbereichen ändern, aber ansonsten durchlaufende Fasern ohne Faserenden in den Verstärkungsbereichen darstellen, wird verhindert, dass ein Faserende durch die Verstärkung an der Bauteiloberfläche freiliegt (wie es im Stand der Technik bei äußeren Verstärkungen aus Faserverbundmaterial der Fall sein kann). Somit kann sich bei dem erfindungsgemäß verstärkten Bauteil kein Faserende im Verstärkungsbereich im Betrieb lösen. Außerdem verringert die integrierte Verstärkung die Rissneigung im Bauteil.

In einer Ausführungsform besitzt der Verstärkungsbereich eine Ausdehnung, die über eine Ausdehnung der Verbindungsfläche hinausgeht, innerhalb der die Kraftübertragungskomponente mit dem Bauteil verbunden ist. Dadurch wird eine Rissneigung gerade im Bereich der Verbindungsfläche zwischen Kraftübertragungskomponente und Bauteil stark verringert.

In einer weiteren Ausführungsform umfasst der Faserverbundbereich mehrere Faserlagen aus übereinander gewickelten Fasern, wobei die Faserlagen im Verstärkungsbereich jeweils abwechselnd aus Fasern mit ersten und zweiten mittleren Faserwinkeln bestehen. Dadurch wird der Verbund zwischen den Normalbereichen und den Verstärkungsbereichen weiter erhöht, da die benachbarten Faserlagen aus Fasern mit unterschiedlichen Faserwinkeln bestehen und somit die Fasern der benachbarten Faserlagen überschneidend gewickelt sind und somit einen starken Verbund mit den darüber- oder darunterliegenden Faserlagen im Verstärkungsberiech herstellen. Die auf diese Weise integrierte Verstärkung reduziert die zu Delaminationen eventuell führenden Eigenspannungen im Bauteil.

In einer weiteren Ausführungsform besitzen die Faserlagen aus Fasern mit dem zweiten mittleren Faserwinkel eine jeweilige erste Ausdehnung parallel zur Verbindungsfläche des Bauteils, wobei sich die ersten Ausdehungen mit wachsendem Abstand der jeweiligen Faserlagen zur Verbindungsfläche verringern. Die Faserlage des Verstärkungsbereichs in der Nähe der Verbindungsfläche zur Kraftübertragungskomponente muss die größten Kräfte auf das Bauteil auffangen. Daher ist es zweckmäßig, die Ausdehnung dieser Faserlage möglichst groß zu wählen. Mit steigendem Abstand zur Verbindungsfläche nimmt die in die jeweiligen Faserlagen eingekoppelte Kraft ab, so dass die erste Ausdehnung der Faserlagen mit wachsendem Abstand abnehmen kann und gleichzeitig die auftretenden Belastungen weiterhin vom verstärkten Bauteil kompensiert werden können. In einer bevorzugten Ausführungsform sind die Faserlagen der Fasern mit dem zweiten mittleren Faserwinkel im seitlichen Schnitt des Verstärkungsbereichs in einer trapezähnlichen Form übereinander angeordnet, wobei die unterste Faserlage der Fasern mit dem zweiten mittleren Faserwinkel die größte erste Ausdehung besitzt. Als trapezähnlich werden alle Formen gezeigt, wobei sich die Ausdehnungen der einzelnen Faserlagen im Wesentlichen symmetrisch verjüngen. Diese spezielle verjüngende Form verleiht dem Bauteil eine besonders große Robustheit gegenüber Belastungen. Die Steilheit der trapezähnlichen Form an den sich verjüngenden Schenkeln kann auf die jeweilige Anwendung hin angepasst werden.

In einer weiteren Ausführungsform ist die Anordnung der Fasern im Verstärkungsbereich so gestaltet, dass die geometrische Form des Faserverbundbereichs im Verstärkungsbereich nicht von der geometrischen Form des benachbarten Normalbereichs abweicht, wobei der Verstärkungsbereich vorzugsweise dieselbe Dicke wie der oder die angrenzenden Normalbereiche besitzt. Durch die mittels des geänderten Faserwinkels in die bestehenden Faserlagen integrierte Verstärkung kann jegliche Vergrößerung des Durchmessers des Bauteils im Verstärkungsbereich vermieden werden, wodurch die erfindungsgemäßen Bauteile mit idealem (nicht durch verstärkende Maßnahmen vergrößerten) Bauvolumen bereitgestellt werden können.

In einer weiteren Ausführungsform sind zumindest an den Oberflächen des Bauteils, die zu der Verbindungsfläche hinweisen und/oder wegweisen, im Verstärkungsbereich Fasern mit dem mittleren ersten Faserwinkel angeordnet. Dadurch wird die integrierte Verstärkung nach außen unsichtbar, da sich die jeweils an den Oberflächen befindlichen Faserlagen in ihrer Faserorientierung zwischen Normalbereich und Verstärkungsbereich nicht unterscheiden. Somit weist das Bauteil nach außen über den gesamten Faserverbundbereich die gleichen Oberflächeneigenschaften auf. Dies ist insbesondere für Anwendungen des Bauteils als Transportwalze für entsprechende zu transportierende Objekte vorteilhaft. Solche Transportwalzen werden beispielsweise in Druckmaschinen verwendet.

Die Erfindung bezieht sich des Weiteren auf einen Rotationskörper mit einem erfindungsgemäßen Bauteil zur Verwendung als ein entlang einer Drehachse drehendes Bauteil, das eine hohlzylindrische Form mit der Zylinderachse als Drehachse besitzt und wobei die Zylinderinnenseite zur Verbindung mit der oder den Kraftübertragungskomponenten vorgesehen ist, und einer oder mehrerer Kraftübertragungskomponenten, die innerhalb einer Verbindungsfläche mit dem Bauteil zur Krafteinleitung in das Bauteil verbunden sind, wobei die Kraftübertragungskomponenten jeweils über eine Welle oder einen Zapfen in einem Lager geeignet gelagert sind und zumindest eine der Wellen oder einen der Zapfen über einen Antrieb geeignet angetrieben werden kann. Die voranstehend beschriebenen Vorteile treffen gleichermaßen auch auf den entsprechend gestalteten Rotationskörper zu.

In einer Ausführungsform wird der Rotationskörper als Welle oder Felge zum Betreiben von Maschinen oder Komponenten, vorzugsweise als Schiffswelle, Antriebswelle, Motorwelle, Getriebewelle, Welle in einer Druckmaschine oder als Rotor zum Speichern von Energie, verwendet. Die voranstehend beschriebenen drehenden Bauteile sind universell zu Zwecken aller Art einsetzbar. Der Fachmann kann den erfindungsgemäßen Rotationskörper im Rahmen der vorliegenden Erfindung auch in anderen Anwendungen einsetzen.

Die Erfindung betrifft des Weiteren ein Verfahren zur Herstellung eines erfindungsgemäßen Bauteils, umfassend die Schritte:
(a) Wickeln einer Faserlage aus einer oder mehreren Fasern auf einen Wickelkörper, wobei die eine oder mehreren Fasern zumindest in einem Normalbereich mit einem mittleren ersten Faserwinkel zur vorgesehenen Richtung einer Krafteinleitung in das Bauteil angeordnet sind;
(b) Wickeln von Fasern in derselben Faserlage in einem Verstärkungsbereich auf den Wickelkörper, wobei die eine oder mehreren Fasern im Verstärkungsbereich mit einem mittleren zweiten Faserwinkel zur vorgesehenen Richtung einer Krafteinleitung in das Bauteil angeordnet sind, wobei der zweite mittlere Faserwinkel kleiner als der erste mittlere Faserwinkel ist;
(c) Wickeln von weiteren Faserlagen aus einer oder mehreren Fasern durch Wiederholen der Verfahrensschritte (a) und (b), bis eine gewünschte Form des Bauteils gewickelt ist;
(d) Aushärten und/oder Abkühlen der Faserlagen und Entfernen des Wickelkörpers.

Die obige Reihenfolge der Verfahrensschritte entspricht dabei nicht einer zeitlichen Reihenfolge. Die Verfahrensschritte (a) und (b) können auch in umgekehrter Reihenfolge ausgeführt werden. Nach den Schritten (b) und/oder (c) kann in einer Ausführungsform zusätzlich ein Zwischenhärtungsschritt für die bereits gewickelten Faserlagen durchgeführt werden.

In einer Ausführungsform umfasst das Verfahren den weiteren Schritt, dass zwischen jeder Faserlage im Verstärkungsbereich aus einer oder mehreren Fasern mit dem zweiten mittleren Faserwinkel eine Faserlage aus einer oder mehreren Fasern mit dem mittleren ersten Faserwinkel gewickelt wird. In einer bevorzugten Ausführungsform umfasst das Verfahren den weiteren Schritt, dass die erste und letzte gewickelt Faserlage nur aus einer oder mehreren Fasern mit dem mittleren ersten Faserwinkel gewickelt wird.

### Kurze Beschreibung der Abbildungen

Diese und andere Aspekte der Erfindung werden im Detail in den Abbildungen wie folgt gezeigt:
- Fig.1:: zwei Ausführungsformen (a) und (b) des erfindungsgemäßen Bauteils;
- Fig.2:: Rotationskörper mit verstärktem Bauteil gemäß dem Stand der Technik;
- Fig.3:: eine Ausführungsform eines zylinderförmigen Rotationskörpers mit erfindungsgemäßem Bauteil in einem seitlichen Schnitt;
- Fig.4:: eine Ausführungsform der Faserorientierung in den Normal- und Verstärkungsbereichen im erfindungsgemäßen Bauteil in Draufsicht auf die Oberseite des Bauteils;
- Fig.5:: eine Ausführungsform der Faserlagen im Normal- und im Verstärkungsbereich eines erfindungsgemäßen Bauteils im seitlichen Schnitt durch die Wand des Bauteils;
- Fig.6:: eine Ausführungsform der Faserorientierungen und Faserlagen im Normal- und im Verstärkungsbereich eines erfindungsgemäßen Bauteils (a) in Draufsicht auf die Oberseite des Bauteils und (b) im seitlichen Schnitt durch die Wand des Bauteils.

### Detaillierte Beschreibung der Ausführungsbeispiele

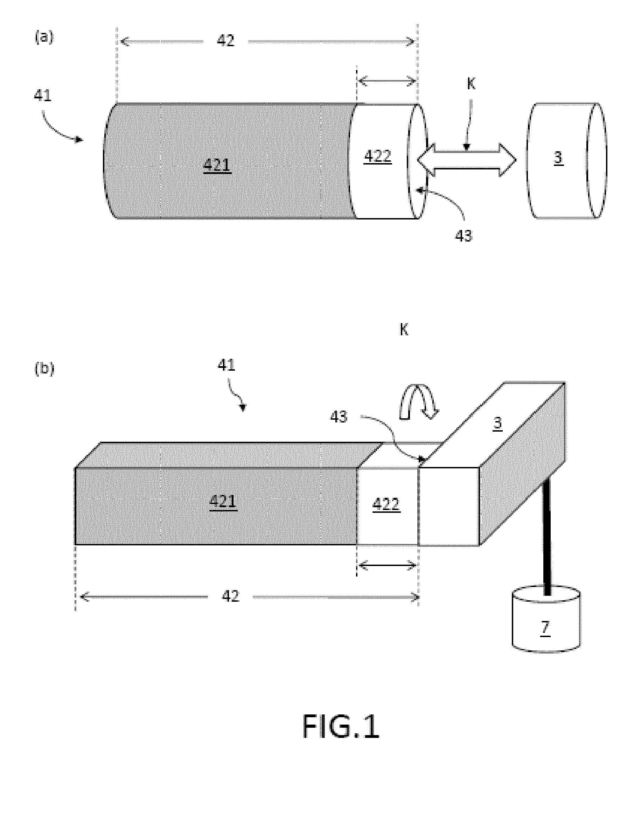

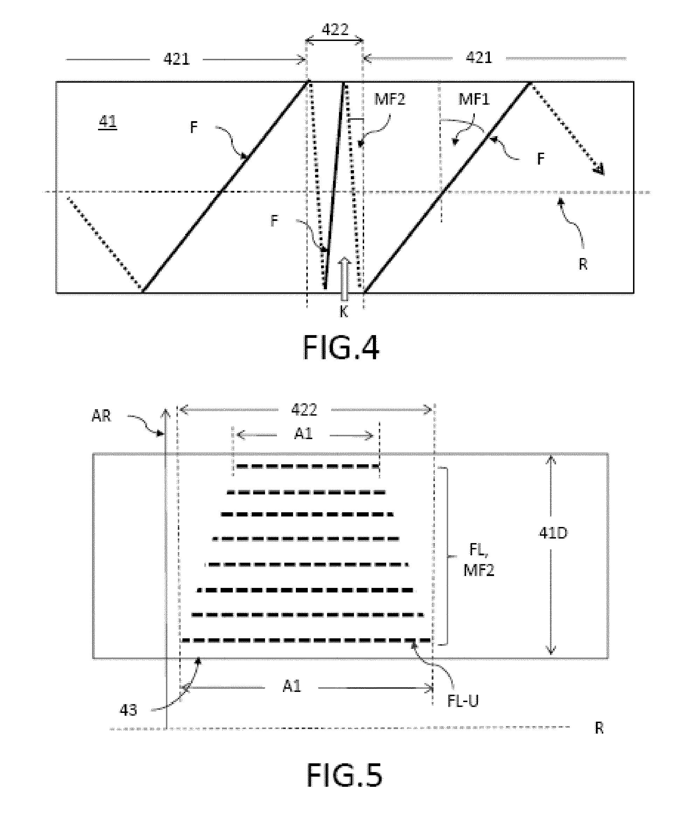

Fig.1 zeigt zwei erfindunsgemäße Bauteile 41 in perspektivischer Ansicht mit einem Faserverbundbereich 42 aus Faserverbundmaterialien, der einen Normalbereich 421 mit einer oder mehreren Fasern F, angeordnet in einem mittleren ersten Faserwinkel MF1 zur Richtung der Krafteinleitung K und mit einem Verstärkungsbereich 422 mit einer Verbindungsfläche 43 zur Verbindung mit einer Kraftübertragungskomponente 3 zur Krafteinleitung K in das Bauteils 41 umfasst, wobei in dem Verstärkungsbereich 422 zur Verstärkung die eine oder mehreren Fasern F zumindest teilweise in einem mittleren zweiten Faserwinkel MF2 zur Richtung der Krafteinleitung K angeordnet sind und der zweite mittlere Faserwinkel MF2 kleiner als der erste mittlere Faserwinkel MF1 ist. Der kleinere Faserwinkel MF2 im Verstärkungsbereich 422 bedeutet, dass die Fasern F im Verstärkungsbereich 422 in Richtung der Krafteinleitung K orientiert sind, da die Fasern F in Faserrichtung die größte Festigkeit besitzen. Die Fasern sind hier nicht im Detail gezeigt. Die gezeigten Bauteile 41 sind in dieser Ausführungsform vollständig aus Faserverbundmaterial hergestellt, da sich der Faserverbundbereich 42 über die gesamte Länge der Bauteile 41 erstreckt. In anderen Ausführungsformen kann der Faserverbundbereich 42 auch nur einen Teil des Bauteils ausmachen. Für die Faserlagen und Faserorientierungen in den in Fig.1 gezeigten Bauteilen 41 wird auf die Figuren 4 bis 6 verwiesen. Die dort gezeigten Faseranordnungen, Faserlagen und Faserorientierungen können in den beispielhaft gezeigten Bauteilen 41 in Fig.1 entsprechend verwendet beziehungsweise angeordnet werden/sein. In Fig.1 (a) ist ein Bauteil 41 mit einem am Ende des Bauteils 41 angeordneten Verstärkungsbereich 422 mit einer kreisförmigen Verbindungsfläche 43 gezeigt. Die Kraftübertragungskomponente 3 übt hier eine Kraft K als Zug- oder Schiebekraft auf das Bauteil 41 aus. Die Zugoder Schiebekraft K kann hier von der Kraftübertragungskomponente 3 beispielsweise mechanisch oder elektromagnetisch ausgeübt werden. Die Krafteinleitung geschieht über die Verbindungsfläche 43. Die eingeleitete Kraft K wird durch den Verstärkungsbereich 422 so aufgenommen, dass das Bauteil 41 die Belastung mittels des kleineren mittleren zweiten Faserwinkels MF2 (Orientierung der Fasern mehr in Richtung der Krafteinleitung) im Verstärkungsbereich 422 auffangen kann und die weniger stark beanspruchten Teile des Bauteils 41 als Normalbereiche 421 mit erstem Faserwinkel MF1 (Faserorientierung kann im Normalbereich gegebenenfalls deutlich von der Richtung der Krafteinleitung abweichen) ausgeführt werden können.

Fig.1 (b) zeigt eine andere Ausführungsform des erfindungsgemäßen Bauteils 41. Am Ende des quaderförmig ausgeführten Bauteils 41 ist ein Verstärkungsbereich 422 mit einer rechteckigen Verbindungsfläche 43 gezeigt. Die Kraftübertragungskomponente 3 ist hier statisch an der Verbindungsfläche 43 mit dem Bauteil 41 verbunden und übt hier eine Torsionskraft K (dargestellt durch den gebogenen Pfeil) auf das Bauteil 41 aus. Die Torsionkraft K an der Verbindungsfläche 43 wird hier beispielsweise mechanisch durch ein Gewicht 7, das am Ende der Kraftübertragungskomponente 3 befestigt ist, erzeugt. Die Krafteinleitung geschieht über die Verbindungsfläche 43. Die eingeleitete Kraft K wird durch den Verstärkungsbereich 422 so aufgenommen, dass das Bauteil 41 die Belastung mittels der zweiten Fasern F2 im Verstärkungsbereich 422 auffangen kann und die weniger stark beanspruchten Teile des Bauteils 41 als Normalbereiche 421 mit Fasern F, angeordnet in einem ersten Faserwinkel MF1, ausgeführt werden können. Die Orientierung der Fasern im Verstärkungsbereich 422 kann hier beispielsweise in einer Ausführungsform wegen der wirkenden Torsionskraft in einem Winkel von 45 Grad ± 5 Grad zur Längsrichtung des Bauteils 41 senkrecht zur Verbindungsfläche 43 des Bauteils 41 angeordnet sein, um die Verstärkung des Bauteils 41 im Verstärkungsbereich 422 noch zusätzlich zu ihren günstigen mechanischen Eigenschaften zu verstärken. Diese Faserorientierung entspricht einem kleinen mittleren zweiten Faserwinkel MF2 zur Richtung der Krafteinleitung im Verstärkungsbereich 422 im Falle einer wirkenden Torsionskraft.

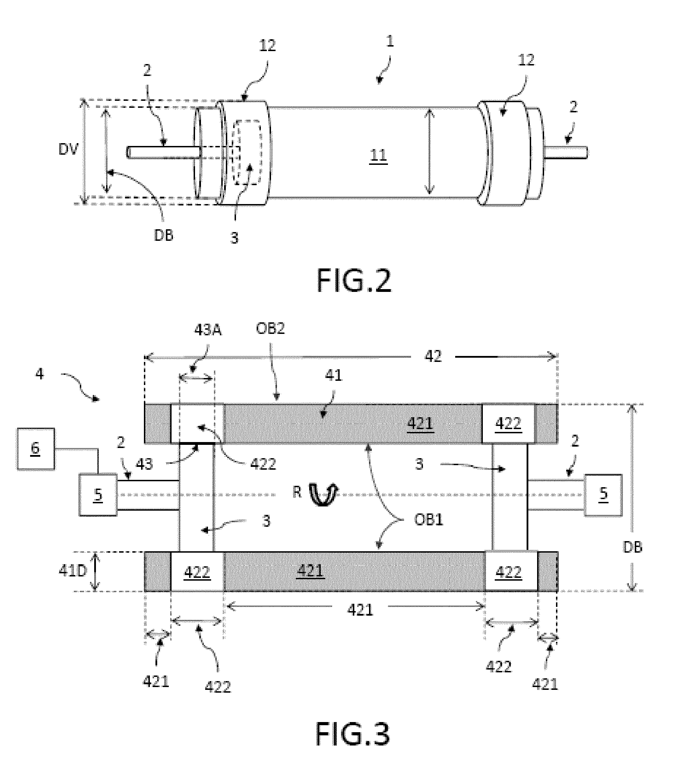

Fig. 2 zeigt einen Rotationskörper 1 mit einem drehenden Bauteil 11 gemäß dem Stand der Technik, das zur Kompensation von Belastungen beim Beschleunigen, Abbremsen des Bauteils 11 oder Drehen des Bauteils 11 bei konstanter Drehzahl mittels einer auf die Antriebswelle 2 wirkenden Kraft von außen mit ringartigen äußeren Verstärkungen 12 verstärkt wurde. Die Antriebswelle 2 greift dabei über eine an der Innenseite des Bauteils befestigte Nabe 3 als Kraftübertragungskomponente auf das Bauteil 11 zu. Die Nabe 3 ist nur gestrichelt gezeigt, da sie in dieser perspektivischen Ansicht von dem Bauteil 11 verdeckt wird. Das Bauteil besitzt einen Durchmesser DB ohne äußere Verstärkungen. Wird das Bauteil in einer Maschine eingebaut, so muss um das Bauteil herum ein größeres Volumen freigehalten werden, da die äußeren Verstärkungen 12 den effektiven Durchmesser des Rotationskörpers 1 auf einen Durchmesser DV erhöhen. Somit kann das Bauteil 11 nicht so platzsparend in seiner Umgebung eingebaut werden, wie es ohne äußere Verstärkungen möglich wäre. Dennoch kann auf die äußeren Verstärkungen 12 nicht verzichtet werden, weil sonst die Belastungen, die über die Nabe 3 auf das Bauteil 11 wirken, zu Beschädigungen des Bauteils 11, beispielsweise Rissbildung im Bereich des Bauteils 11 um die Nabe 3 herum, führen würden. Sind die äußeren Verstärkungen 12 zudem aus Faserverbundmaterial gefertigt, so besteht die Gefahr, dass die äußeren Verstärkungen 12 im Betrieb ausbrechen, was zu einer nachlassenden Verstärkung und einer entsprechend verminderten mechanischen Belastbarkeit des Bauteils 11 und einer Verschmutzung der Umgebung des Bauteils 11 mit losgelösten Fasern führen würde.

Fig. 3 zeigt dagegen eine Ausführungsform eines erfindungsgemäßen zylinderförmigen Rotationskörpers 4 mit erfindungsgemäßem Bauteil in dieser Ausführungsform als drehendes Bauteil in einem seitlichen Schnitt. Das Bauteil 41 umfasst eine in das vorgesehene Faserverbundmaterial integrierte Verstärkung in entsprechend ausgestalteten Verstärkungsbereichen 422. Der Rotationskörper 4 umfasst ein Bauteil 41 und zwei Kraftübertragungskomponenten 3, die jeweils innerhalb einer Verbindungsfläche 43 mit dem Bauteil 41 zur Variation der Rotationsenergie des Rotationskörpers 4 fest verbunden sind, wobei die Kraftübertragungskomponenten 3 jeweils über eine Welle 2 in einem Lager 5 geeignet gelagert sind und zumindest eine der Wellen 2 über einen Antrieb 6 geeignet angetrieben werden kann. Das Bauteil 41 besitzt in dieser Ausführungsform eine hohlzylindrische Form mit der Zylinderachse als Drehachse R, wobei die Zylinderinnenseite OB1 zur Verbindung mit den Kraftübertragungskomponenten 3 dient. Die Wandstärke 41 D des Bauteils 41 ist durch den Doppelpfeil schematisch angegeben und kann je nach Anwendung stark variieren. In anderen Ausführungsformen kann der Rotationskörper 4 auch eine sich durch den gesamten Bereich des zylinderförmigen Bauteils 41 erstreckende oder eine den gesamten vom Bauteil umschlossenen inneren Bereich ausfüllende Kraftübertragungskomponente 3 umfassen. Für diese Ausführungsformen gelten im Prinzip die gleichen Aussagen, nur dass die Verbindungsbereiche 43 entsprechend variieren und sich die in das Bauteil 41 eingekoppelten Kräfte entsprechend verteilen. Das Bauteil umfasst einen Faserverbundbereich 42 aus Faserverbundmaterialien und eingebetteten Fasern F, der einen oder mehrere Normalbereiche 421 mit Fasern F mit einem mittleren ersten Faserwinkel MF1 und einen oder mehrere Verstärkungsbereiche 422 umfasst, die zur Verbindung mit einer jeweiligen Kraftübertragungskomponente 3 zur Krafteinleitung in das Bauteils 41 vorgesehen sind, wobei die eine oder mehreren Faser(n) F im Verstärkungsbereich 422 zumindest teilweise mit einem mittleren zweiten Faserwinkel MF2 zur Richtung der Krafteinleitung in das Bauteils 41 angeordnet sind, wobei der mittlere zweite Faserwinkel kleiner als der mittlere erste Faserwinkel ist. Beispielsweise beträgt der mittlere zweite Faserwinkel < 10 Grad zur Richtung der Krafteinleitung und der mittlere erste Faserwinkel > 30 Grad zur Richtung der Krafteinleitung. Bei rotierenden Körpern geschieht die Krafteinleitung K im Wesentlichen in radialer Richtung, so dass die Fasern im Verstärkungsbereich 422 im Wesentlichen in radialer Richtung (in einem möglichst oder nahezu 90 Grad betragenden Winkel zur Drehachse, bespielsweise > 80 Grad zur Drehachse) angeordnet sind und die Faserorientierung im Normalbereich 421 gegebenenfalls deutlich von der radialen Orientierung abweichen kann (Faserorientierung im Normalbereich mit einem mitteleren Winkel < 60 Grad zur Drehachse). In der hier gezeigten Ausführungsform ist das gesamte Bauteil 41 aus Faserverbundmaterial gefertigt. Die Verstärkungsbereiche 422 besitzen hier Ausdehnungen parallel zur Drehachse R, die über die Ausdehnung 43A der jeweiligen Verbindungsflächen 43 hinausgehen, innerhalb der die Kraftübertragungskomponente 3 mit dem Bauteil 41 verbunden ist. In dieser Ausführungsform sind die jeweiligen Kraftübertragungskomponente 3 scheibenförmig ausgeführt, so dass die Verbindungsfläche 43 in der Verbindungsfläche 43 hinweisenden Oberfläche OB1 des Bauteils umläuft. Die Kraftübertragungskomponenten 3 können aber auch speichenförmig ausgestaltet sein, so dass es pro Kraftübertragungskomponente 3 mehrere separate Verbindungsflächen 43 gibt. Hierbei umlaufen die Verstärkungsbereiche 422 das Bauteil 41 im Bereich der Kraftübertragungskomponente 3 ebenfalls komplett. Die Anordnung der Fasern F ist im Verstärkungsbereich 422 dabei so gestaltet, dass die geometrische Form des Faserverbundbereichs 42 im Verstärkungsbereich 422 nicht von der geometrischen Form des benachbarten Normalbereichs 421 abweicht, wobei der Verstärkungsbereich 422 dieselbe Dicke 41 D wie die jeweils angrenzenden Normalbereiche 421 besitzt. Die Oberfläche des Bauteils 41, die von der Verbindungsfläche 43 wegweist, wird als Oberfläche OB2 bezeichnet. Der gezeigte Rotationskörper 4 kann beispielsweise als Welle oder Felge zum Betreiben von Maschinen oder Komponenten, vorzugsweise als Schiffswelle, Antriebswelle, Motorwelle, Getriebwelle, Welle in einer Druckmaschine oder als Rotor zum Speichern von Energie, verwendet werden.

Fig. 4 zeigt eine Ausführungsform der Faserorientierung in den Normal- und Verstärkungsbereichen 421, 422 im erfindungsgemäßen Bauteil 41 gemäß Fig.3 (zur Rotation um eine Drehachse R vorgesehenes Bauteil) in Draufsicht auf die Oberseite OB2 des Bauteils 41. Aus Gründen der Übersichtlichkeit ist hier nur die Ausrichtung der Wicklung einer einzelnen Faser F beispielhaft gezeigt. Natürlich ist jede Faserlage FL des Bauteils 41 so gewickelt, dass die eine oder mehreren Faser(n) F pro Faserlage FL eng nebeneinander oder in Kontakt zueinander gewickelt sind und die Wand des Bauteils 41 aus einer Vielzahl an Faserlagen FL zur Erzeugung einer gewünschten Wanddicke 41 D aufgebaut ist. Die gezeigte Faser F ist dabei im Normalbereich 421 mit einem mittleren ersten Faserwinkel MF1 zur Richtung der Krafteinleitung K in das Bauteils 41 und im Verstärkungsbereich 422 mit einem mittleren zweiten Faserwinkel MF2 zur Richtung der Krafteinleitung K in das Bauteil 41 angeordnet, wobei der zweite mittlere Faserwinkel MF2 kleiner als der erste mittlere Faserwinkel MF1 ist. Bei rotierenden Körpern geschieht die Krafteinleitung K (dargestellt durch den entsprechenden Pfeil K) im Wesentlichen in radialer Richtung, so dass die Fasern im Verstärkungsbereich 422 im Wesentlichen in radialer Richtung (in einem möglichst oder nahezu 90 Grad betragenden Winkel zur Drehachse, bespielsweise > 80 Grad zur Drehachse) angeordnet sind und die Faserorientierung im Normalbereich 421 gegebenenfalls deutlich von der radialen Orientierung abweichen kann (Faserorientierung im Normalbereich mit einem mitteleren Winkel < 60 Grad zur Drehachse). Die durchgezogene Linie der Faser F stellt dabei die auf der zugewandten Oberfläche des zur Rotation vorgesehenen Bauteils 41 direkt sichtbare Faser F dar, während die gepunktete Linie die Faser F auf der abgewandten Seite der Oberfläche des Bauteils 41 darstellt. Die mittleren Faserwinkel können dabei je nach Anwendung deutlich variieren. Dort, wo der mittlere zweite Faserwinkel MF2 kleiner als der erste mittlere Faserwinkel MF1 ist, liefert der Faserwinkelunterschied einen Beitrag zum Grad der Verstärkung in den Verstärkungsbereichen 422. Durch die günstige Wahl des Faserwinkels MF2 im Verstärkungsbereich 422 kann das Bauteil 41 deutlich verstärkt werden. Fasern besitzen in Faserrichtung die höchste Festigkeit. Somit ist der Verstärkungsbereich 422 mechanisch umso robuster gegenüber Belastungen, je kleiner der Faserwinkel MF2 ist. Idealerweise besitzen die Fasern im Verstärkungsbereich eine Orientierung in Richtung der Krafteinleitung K, was einem zweiten Faserwinkel = 0 Grad entsprechen würde.

Fig. 5 zeigt eine Ausführungsform der Ausdehnung der Faserlagen FL parallel zur Verbindungsfläche 43 im Verstärkungsbereich 422 des erfindungsgemäßen Bauteils 41 im seitlichen Schnitt. Hier besitzen die Faserlagen FL mit Fasern F mit einem mittleren zweiten Faserwinkel MF2 eine jeweilige erste Ausdehnung A1 parallel zur Verbindungsfläche 43, wobei sich die ersten Ausdehungen A1 mit wachsendem Abstand AR der jeweiligen Faserlagen FL zur Verbindungsfläche 43 verringern. Hierbei sind die Faserlagen FL der Fasern F mit mittlerem zweiten Faserwinkel MF2 im seitlichen Schnitt des Verstärkungsbereichs 422 in einer trapezähnlichen Form übereinander angeordnet, wobei die unterste Faserlage FL-U mit diesen Fasern F die größte erste Ausdehung A1 besitzt. Die Faserlage des Verstärkungsbereichs 422 in der Nähe der Verbindungsfläche 43 zur Kraftübertragungskomponente 3 muss die größten Kräfte auf das Bauteil 41 auffangen. Daher ist es zweckmäßig, die Ausdehnung diese Faserlage FL-U möglichst groß zu wählen. Mit steigendem Abstand AR zur Verbindungsfläche 43 nimmt die in die jeweiligen Faserlagen FL eingekoppelte Kraft ab, so dass die erste Ausdehnung A1 der Faserlagen FL mit Fasern F mit einem mittleren zweiten Faserwinkel MF2 mit wachsendem Abstand AR abnehmen kann und gleichzeitig die auftretenden Belastungen weiterhin vom verstärkten Bauteil 41 kompensiert werden können. Diese in Figur 5 gezeigte spezielle verjüngende trapezähnliche Form verleiht dem Bauteil 41 eine verbesserte Robustheit gegenüber Belastungen. Die Steilheit der trapezähnlichen Form an den sich verjüngenden Schenkeln kann auf die jeweilige Anwendung angepasst werden. Durch die sich verkleinernden ersten Ausdehnungen A1 wird zudem der Verbund zwischen den benachbarten Faserlagen FL noch weiter verstärkt. In einer anderen Ausführungsform können die Faserlagen FL auch nicht-trapezförmig ihre Ausdehnung A1 mit steigendem Abstand AR verringern, sofern diese andere Form für die jeweilige Anwendung ebenfalls geeignet ist. Hierbei können die Faserlagen im Verstärkungsbereich 422 ausschließlich aus Faserlagen FL mit zweitem mittleren Faserwinkel MF2 bestehen oder zum Teil Faserlagen FL mit Fasern F umfassen, die einen ersten mittleren Faserwinkel MF1 zur Drehachse besitzen. In einer bevorzugten Ausführungsform besitzen die Fasern F der Faserlagen FL im Verstärkungsbereich 422 abwechselnd einen mittleren ersten Faserwinkel MF1 und einen mittleren zweiten Faserwinkel MF2. Die hier gezeigte Form des Verstärkungsbereichs ist sowohl für statische als auch für dynamische Belastungen im Verstärkungsbereich anwendbar.

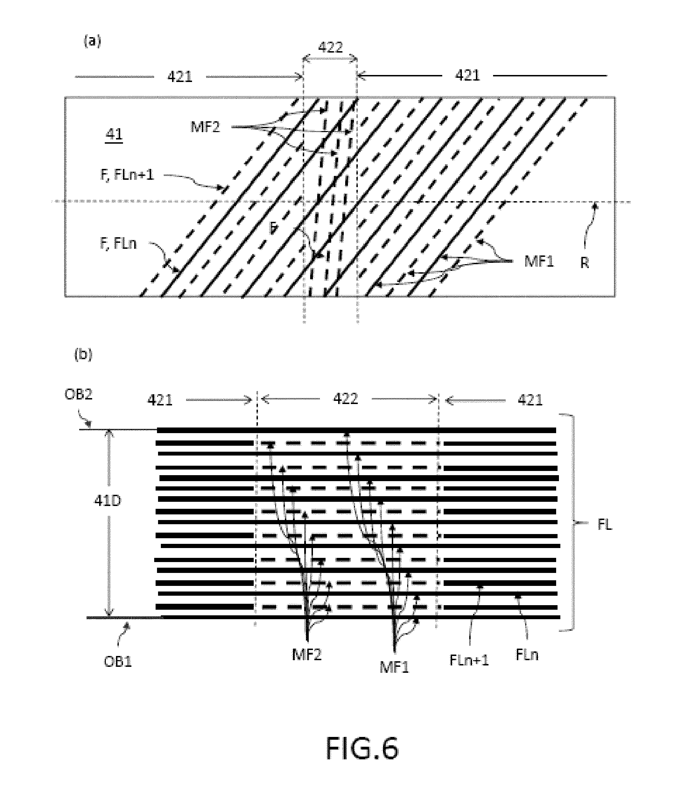

Fig. 6 zeigt eine Ausführungsform der Faserorientierungen und Faserlagen FL in den Normal- und Verstärkungsbereichen 421, 422 eines erfindungsgemäßen Bauteils 41, (a) in Draufsich auf die Oberseite OB2 des Bauteils 41 und (b) im seitlichen Schnitt durch die Wand des Bauteils 41 mit Wanddicke 41 D. In Figur 6 (a) sind die gewickelten Fasern F schematisch für zwei benachbarte Faserlagen FLn und FLn+1 gezeigt. Die Position dieser benachbarten Faserlagen in der Wand des Bauteils 41 ist für die schematische Darstellung hier ohne Bedeutung. Die Wicklungen sind aus Übersichtsgründen mit großem Abstand zueinander dargestellt. In realen Bauteilen 41 werden die Fasern F einer Faserlage FL eng nebeneinander oder im direkten Kontakt zueinander gewickelt. Außerdem werden die unterschiedlichen Faserlagen FL direkt aufeinander gewickelt, so dass die benachbarten Faserlagen FLn und Fn+1 sich im direkten Kontakt aufeinander befinden. In dieser Ausführungsform ist eine Faser F der Faserlage FLn (als durchgezogene Linie dargestellt) durchlaufend für die Normalbereiche 421 und den Verstärkungsbereich 422 mit einem ersten mittlerem Faserwinkel MF1 angeordnet. Auf diese Faserlage FLn wird die nächste Faserlage FLn+1 mit einer Faser F mit einem ersten mittleren Faserwinkel MF1 in den Normalbereichen 421 und mit einem zweiten mittleren Faserwinkel MF2 im Verstärkungsbereich 422 angeordnet, so dass die Fasern F der Faserlagen FLn und FLn+1 im Verstärkungsbereich 422 einen Faserwinkelunterschied besitzen, so dass sich die Fasern F zusätzlich überlappen (überschneiden), was den Verbund zwischen den Faserlagen FLn und FLn+1 deutlich erhöht. In Figur 6 (b) wird die entsprechende Struktur der Faserlagen FL im seitlichen Schnitt dargestellt. Hier umfasst der Faserverbundbereich 42 sowohl in den Normalbereichen 421 als auch in dem Verstärkungsbereich 422 durchgehende Faserlagen FL aus übereinander gewickelten Fasern F, wobei die Faserlagen FL im Normalbereich 421 mit einem erstem Faserwinkel MF1 und im Verstärkungsbereich 422 jeweils abwechselnd aus Fasern F mit erstem Faserwinkel MF1 (als durchgezogene Linien dargestellt und beispielhaft als FLn bezeichnet) und mit zweitem Faserwinkel MF2 (hier als gestrichelte Linien dargestellt und als Faserlage FLn+1 bezeichnet) bestehen. Die hier gezeigte Anzahl an Faserlagen FL dient nur der Veranschaulichung der Faserlagenstruktur. In den meisten Bauteilen 41 wird die Anzahl der Faserlagen FL wesentlich größer sein als hier abgebildet. Die Anzahl der Faserlagen bestimmt sich im Allgemeinen (gilt auch für die anderen Abbildungen) aus der Faserdicke und der gewünschten Wanddicke 41 D des Bauteils 41. Durch die integrierte Anordnung der Faser F mit zweitem Faserwinkel MF2 im Verstärkungsbereich 422 in die bestehende Faserlagenstruktur der Normalbereiche 421 weicht die geometrische Form des Faserverbundbereichs 42 im Verstärkungsbereich 422 nicht von der geometrischen Form des benachbarten Normalbereichs 421 ab. Insbesondere besitzt der Verstärkungsbereich 422 dieselbe Dicke 41 D wie die angrenzenden Normalbereiche 421. Somit kann das erfindungsgemäße Bauteil 41 bei hervorragender Robustheit gegenüber mechanischen Belastungen sehr platzsparend in die entsprechende Maschinenumgebung eingebaut werden. In dieser Ausführungsform sind außerdem an den Oberflächen des Bauteils 41, die zu der Verbindungsfläche 43 hinweisen OB1 und/oder wegweisen OB2, im Verstärkungsbereich 422 Fasern F mit erstem mittleren Faserwinkel MF1 angeordnet. Somit besitzt das Bauteil 41 über die gesamten Oberflächen OB1 und OB2 hinweg die gleichen Oberflächeneigenschaften. Insofern werden die Anwendungseigenschaften des Bauteils 41 nicht von der Positionierung der Verstärkungsbereiche 422 beeinflusst. Dadurch wird der Verbund zwischen den Normalbereichen 421 und den Verstärkungsbereichen 422 deutlich erhöht, da die benachbarten Faserlagen FL einen mittleren Faserwinkelunterschied gleich der Differenz zwischen dem mittleren zweiten Faserwinkel MF2 und dem mittleren ersten Faserwinkel MF1 besitzen und sich somit überschneiden. Dadurch wird ein starker Verbund zwischen benachbarten Faserlagen FL im Verstärkungsbereich 422 hergestellt. Die auf diese Weise integrierte Verstärkung reduziert die zu Delaminationen eventuell führenden Eigenspannungen im Bauteil 41.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Rotationskörper gemäß dem Stand der Technik
- 11: Bauteil gemäß dem Stand der Technik
- 12: äußere Verstärkung des Bauteils gemäß dem Stand der Technik
- 2: (Antriebs-) Welle oder Zapfen
- 3: Kraftübertragungskomponente (beispielsweise Nabe)
- 4: erfindungsgemäßer Rotationskörper
- 41: erfindungsgemäßes Bauteil
- 41D: Wandstärke des Bauteils
- 42: Faserverbundbereich
- 421: Normalbereich im Faserverbundbereich
- 422: Verstärkungsbereich im Faserverbundbereich
- 43: Verbindungsfläche zwischen Kraftübertragungskomponente und Bauteil
- 43A: Ausdehnung der Verbindungsfläche parallel zur Drehachse
- 5: Lager der Welle
- 6: Antrieb zum Antreiben der Welle
- 7: Gewicht

- A1: erste Ausdehunungen der Faserlagen mit zweitem Faserwinkel parallel zur Drehachse
- AR: Abstand zur Drehachse
- DB: Durchmesser des Bauteils
- DV: Durchmesser des Bauteils mit äußerer Verstärkung
- F: Faser
- FL: Faserlage(n)
- FLn: eine beliebige n-te Faserlage im Faserverbund
- FLn+1: eine zu FLn benachbarte Faserlage
- FL-U: unterste Faserlage mit Fasern mit zweitem Faserwinkel
- K: Krafteinleitung (Richtung der Krafteinleitung)
- MF1: mittlerer erster Faserwinkel der Fasern
- MF2: mittlerer zweiter Faserwinkel der Fasern
- OB1: zur Drehachse hinweisende Oberfläche des Bauteils, Zylinderinnenseite
- OB2: von der Drehachse wegweisende Oberfläche des Bauteils
- R: Rotationsachse

## Patentansprüche

1. Ein Bauteil (41) mit einem Faserverbundbereich (42) aus Faserverbundmaterialien, umfassend einen oder mehrere Normalbereiche (421) und einen oder mehrere Verstärkungsbereiche (422) mit einer oder mehreren Verbindungsflächen (43), die zur Verbindung mit einer jeweiligen Kraftübertragungskomponente (3) zur Krafteinleitung (K) in das Bauteils (41) vorgesehen sind, wobei die eine oder mehreren Faser(n) (F) im Normalbereich (421) in einem mittleren ersten Faserwinkel (MF1) zur Richtung der Krafteinleitung und im Verstärkungsbereich (422) zumindest teilweise in einem mittleren zweiten Faserwinkel (MF2) zur Richtung der Krafteinleitung angeordnet sind und der zweite mittlere Faserwinkel (MF2) kleiner als der erste mittlere Faserwinkel (MF1) ist.

2. Das Bauteil (41) nach Anspruch 1,
**dadurch gekennzeichnet,**
**dass** der Verstärkungsbereich (422) eine Ausdehnung besitzt, die über eine Ausdehnung (43A) der Verbindungsfläche (43) hinausgeht, innerhalb der die Kraftübertragungskomponente (3) mit dem Bauteil (41) verbunden ist.

3. Das Bauteil (41) nach Anspruch 1 oder 2,
**dadurch gekennzeichnet,**
**dass** der Faserverbundbereich (42) mehrere Faserlagen (FL) aus übereinander gewickelten Fasern (F) umfasst, wobei die Faserlagen (FL) im Verstärkungsbereich (422) jeweils abwechselnd aus Fasern (F) mit erstem und zweitem mittleren Faserwinkel (MF1, MF2) bestehen.

4. Das Bauteil (41) nach Anspruch 3,
**dadurch gekennzeichnet,**
**dass** die Faserlagen (FL) aus Fasern (F) mit dem zweiten mittleren Faserwinkel (MF2) eine jeweilige erste Ausdehnung (A1) parallel zur Verbindungsfläche (43) des Bauteils (41) besitzen, wobei sich die ersten Ausdehungen (A1) mit wachsendem Abstand (AR) der jeweiligen Faserlagen (FL) zur Verbindungsfläche (43) verringern.

5. Das Bauteil (41) nach Anspruch 4,
**dadurch gekennzeichnet,**
**dass** die Faserlagen (FL) der Fasern (F) mit dem zweiten mittleren Faserwinkel (MF2) im seitlichen Schnitt des Verstärkungsbereichs (422) in einer trapezähnlichen Form übereinander angeordnet sind, wobei die unterste Faserlage (FL-U) der Fasern (F) mit dem zweiten mittleren Faserwinkel (MF2) die größte erste Ausdehung (A1) besitzt.

6. Das Bauteil (41) nach einem der voranstehenden Ansprüche,
**dadurch gekennzeichnet,**
**dass** die Anordnung der Fasern (F) im Verstärkungsbereich (422) so gestaltet ist, dass die geometrische Form des Faserverbundbereichs (42) im Verstärkungsbereich (422) nicht von der geometrischen Form des benachbarten Normalbereichs (421) abweicht, wobei der Verstärkungsbereich (422) vorzugsweise dieselbe Dicke (41 D) wie der oder die angrenzenden Normalbereiche (421) besitzt.

7. Das Bauteil (41) nach einem der voranstehenden Ansprüche,
**dadurch gekennzeichnet,**
**dass** zumindest an den Oberflächen des Bauteils (41), die zu der Verbindungsfläche (43) hinweisen (OB1) und/oder wegweisen (OB2), im Verstärkungsbereich (422) Fasern (F) mit dem mittleren ersten Faserwinkel (MF1) angeordnet sind.

8. Das Bauteil (41) nach einem der voranstehenden Ansprüche,
**dadurch gekennzeichnet,**
**dass** die eine oder mehreren Fasern (F) ein oder mehrere Elemente aus der Gruppe Naturfaser, Glasfaser, Keramikfaser, Stahlfasern, synthetische Faser, Kohlenstofffaser oder belastbarere Kohlenstofffaser sind.

9. Das Bauteil (41) nach einem der voranstehenden Ansprüche,
**dadurch gekennzeichnet,**
**dass** das Bauteil (41) vollständig aus Faserverbundmaterial hergestellt ist.

10. Das Bauteil (41) nach einem der voranstehenden Ansprüche,
**dadurch gekennzeichnet,**
**dass** das Bauteil (41) zur Verwendung als ein entlang einer Drehachse (R) drehendes Bauteil (41) vorgesehen ist und eine hohlzylindrische Form mit der Zylinderachse als Drehachse (R) besitzt, wobei die Zylinderinnenseite (OB1) zur Verbindung mit der oder den Kraftübertragungskomponenten (3) vorgesehen ist.

11. Ein Rotationskörper (4) mit einem Bauteil (41) nach Anspruch 10 und einer oder mehrerer Kraftübertragungskomponenten (3), die innerhalb einer Verbindungsfläche (43) mit dem Bauteil (41) zur Krafteinleitung in das Bauteil (4) verbunden sind, wobei die Kraftübertragungskomponenten (3) jeweils über eine Welle oder einen Zapfen (2) in einem Lager (5) geeignet gelagert sind und zumindest eine der Wellen oder Zapfen (2) über einen Antrieb (6) geeignet angetrieben werden kann.

12. Der Rotationskörper (4) nach Anspruch 11,
**dadurch gekennzeichnet,**
**dass** der Rotationskörper (4) als Welle oder Felge zum Betreiben von Maschinen oder Komponenten, vorzugsweise als Schiffswelle, Antriebswelle, Motorwelle, Getriebwelle, Welle in einer Druckmaschine oder als Rotor zum Speichern von Energie, verwendet wird.

13. Verfahren zur Herstellung eines Bauteils (41) nach Anspruch 1, umfassend die Schritte
(a) Wickeln einer Faserlage (FL) aus einer oder mehreren Fasern (F) auf einen Wickelkörper, wobei die eine oder mehreren Fasern (F) zumindest in einem Normalbereich (421) mit einem mittleren ersten Faserwinkel (MF1) zur vorgesehenen Richtung einer Krafteinleitung (K) in das Bauteil (41) angeordnet sind;
(b) Wickeln von Fasern (F) in derselben Faserlage (FL) in einem Verstärkungsbereich (422) auf den Wickelkörper, wobei die eine oder mehreren Fasern (F) im Verstärkungsbereich (422) mit einem mittleren zweiten Faserwinkel (MF2) zur vorgesehenen Richtung einer Krafteinleitung (K) in das Bauteil (41) angeordnet sind, wobei der zweite mittlere Faserwinkel (MF2) kleiner als der erste mittlere Faserwinkel (MF1) ist;
(c) Wickeln von weiteren Faserlagen (FL) aus einer oder mehreren Fasern (F) durch Wiederholen der Verfahrensschritte (a) und (b), bis eine gewünschte Form des Bauteils gewickelt ist;
(d) Aushärten und/oder Abkühlen der Faserlagen und Entfernen des Wickelkörpers.

14. Das Verfahren nach Anspruch 13,
umfassend den weiteren Schritt, dass zwischen jeder Faserlage (FL) im Verstärkungsbereich (422) aus einer oder mehreren Fasern (F) mit dem zweiten mittleren Faserwinkel (MF2) eine Faserlage (FL) aus einer oder mehreren Fasern (F) mit dem mittleren ersten Faserwinkel (MF1) gewickelt wird.

15. Das Verfahren nach Anspruch 14,
umfassend den weiteren Schritt, dass die erste und letzte gewickelt Faserlage (FL) nur aus einer oder mehreren Fasern (F) mit dem mittleren ersten Faserwinkel (MF1) gewickelt wird.
